# EUROPEAN PATENT APPLICATION

(11) **EP 1 679 663 A1**
(43) Date of publication of application: **12.07.2006**
(21) Application number: 03818733.2
(22) Date of filing: 23.09.2003
(51) Int. Cl.: G06T 17/40, G06F 13/00

(54) **THREE-DIMENSIONAL COMMUNICATION MEANS**

(71) Applicant: Barjau Delgado, Everest, C.P. 01900, México, D.F. (MX)
(72) Inventor: Barjau Delgado, Everest, C.P. 01900, México, D.F. (MX)
(74) Representative: Gervasi, Gemma
(86) International application number: PCT/MX2003/000076
(87) International publication number: WO 2005/029415

(57) **Abstract**

The present invention is related to the information flow control systems for different applications, such as advertising, education, entertainment or transmission of general information for communication purposes, among others. More specifically, it relates to the systems that allow the information flow control and their support systems to project three-dimensional images, floating in space with synchronized audio, and controlling the projected information in situ or remotely by a central control unit.

The system, which is the object of the present description, has the technological advantage of allowing the dynamic exchange of information through the projection of static or mobile images that can undergo transformations in their appearance, shape, color, size or any other visual characteristic, that are able to contain audio and be interactive, as well as work in coordination with a second plane visual support (static or dynamic) and incorporate other different functionalities that support the communication strategy.

Basically, the structure of the system consists of a remote 3D projection subsystems network, administered, controlled, supervised and operated remotely by a central control unit, through a telecommunications system, or in situ by a group of operators. The remote subsystems can work simultaneously or not, projecting different messages, and be placed in any location.

## Description

### TECHNICAL FIELD

The present invention is related to the Information flow control systems for different applications, such as advertising, education, entertainment or transmission of general information for communication purposes, among others. More specifically, it relates to the systems that allow the information flow control and their support systems to project three-dimensional images, floating in space with synchronized audio, and controlling the projected information in situ or remotely by a central control unit.

### BACKGROUND ART

Different Communications media already exist, such as television and radio broadcasting or printed media, whose solutions do not include, in any case, projection components of three-dimensional virtual images, with or without audio. These media have been used in open or public systems, as in restricted or private circuits.

There also exist outdoors advertising media that portray images in two dimensions and that develop permanent or temporary infrastructure, such as outdoor billboards, bus stop advertising, ad space in buses, kiosks, newspapers stalls, etc. However, these communication concepts are static or its operation is not controlled from a central control unit, since the change of content requires a physical action in situ.

Large TV screens are also used outdoors and, more recently, inside shopping centers and supermarkets but, in most cases, these advertising solutions do not support audio and are developed with two-dimensional image projection technologies; the administration of the projected message, when they integrate a net of systems, is associated to a physical space (building) and always projecting the same message, without segmenting the screens net in different sub nets.

Indoor image advertising media is also common, with permanent or temporary infrastructure, also including two-dimensional solutions supported by animated images projected with electronic technologies (TV set, slides, LCD projectors, etc.), with or without audio. These solutions are administered, supervised or operated in situ and not remotely from a central control unit.

There are other indoor communication media administered centrally, with fixed infrastructure, but based exclusively on audio.

Three-dimensional projection image solutions also exist, such as the German (Visucom) or Spanish (Nova Vision 3D) solutions, oriented to promotional strategies, like displays. In these cases, the message projection does not change and is associated to a single brand, product or message and its administration is exclusively local; reason why the concept is considered as a promotional media tool and not advertising media. Due to either a technological impediment or lack of a solution development, the versatility of 3D image projection used by existing solutions is limited to a single message and does not allow for the remote administration and operation (centralized) of different messages. The 3D solutions described above exclusively have a promotional focus and project images between 20 and 40 centimeters in size, approximately. A more versatile system, able to be controlled remotely as well as in situ, and that allows three-dimensional messages to be projected in a remote systems network, will have many competitive advantages that involve an interesting technological development.

The background art preceding the innovation that will be described in this document, does not include the concept of communication media with three-dimensional message projection and is not designed to solve the requirements to operate, supervise, administrate and control a network of 3D remote systems through a central control unit and in situ by an operator, nor to change or to determine the schedule in which different messages will be projected or to change the messages to be projected.

With current three-dimensional image projection technology has not been developed a networking solution controlled through a central control unit, such as the solution presented here. The main reasons include the technology basis, an inability to transmit messages through digital telecommunications solutions or the requirement of a very large telecommunications bandwidth. There are no media applications, especially for advertising, that are based on three-dimensional image projection technology.

Current technological systems that project three-dimensional images in advertising applications have temporary goals, such as stands or promotional displays and do not include audio solutions.

### OBJECTS OF THE INVENTION

The present invention has the following objects:
1. To make possible a communication system that allows the projection of three-dimensional messages, with synchronized audio, integrating a network of remote subsystems able to display three-dimensional messages, which are stored in each remote subsystem.
2. To achieve a system: (1) that allows the administration of the message projection time schedule in each one of the remote subsystems, where each of the projection schedules are defined by a central control unit or in situ by an operator, and (2) that is able to project messages transmitted from the central control unit in real time in some remote subsystems.
3. To allow modification through the timed messages stored in each one of the remote subsystems.
4. To develop a system that is able to transform the animated images that compose a message in their appearance, color, size, position or any other visual characteristic; that are able to contain audio and be interactive, as well as work in coordination with a back plane visual support (static or dynamic) and incorporate other different functionalities that support the communication strategy.
5. To develop a system capable of controlling slots of time available for hire for the projection of messages; to select the networks and circuits (remote subsystems segmentation) where the projection of a message is desired; to interact with the observer of a message projected by a remote subsystem; to know the operation status and reproduction of messages in each remote subsystem; and any contractual and administrative relationship between the system operator and the advertiser, such as billing, pending projections to be executed, etc.

And all other qualities and objects that may not have been described above and will become apparent in the description of the aforementioned invention and the accompanying drawings presented below.

### BRIEF DESCRIPTION OF THE INVENTION

The system consists of a series of subsystems that carry out diverse functions oriented to create a versatile solution to project three-dimensional images suspended in space, with audio.

The first subsystem that conforms our invention is the **Central Control Unit,** whose functions are, on the one hand, to allow advertisers to hire free time slots according to their requirements and the remote subsystem segmentation. On the other hand, the central control unit has the ability to store the messages hired by all advertisers in a **Central or Master 3D Video-Library** and transmitting them selectively to the Remote Subsystems. Another function assigned to this subsystem is to monitor consumer behavior according to the off-line and on-line reports and videotapes that are generated in the remote subsystems, including those from the direct interaction with observers, according to current legislation and the advertisers' policies.

The central control unit also monitors the state of the operation of each one of the remote subsystems, registering operation error alarms that trigger preventive and corrective actions, and determining their specific rules of operation, such as schedules of image projection, turn-on and turn-off times, subsystem and database maintenance, etc., through a **Central or Master Operation Schedule.**

Another of the subsystems that integrates the system of the present invention is the Telecommunications System, which connects the central control unit with the remote subsystems.

The last subsystem is the **Remote Subsystems Networks,** which segments all the remote subsystems in several **Networks** and **Circuits,** according to the advertisers' requirements. This subsystem allows for the organization of an individual **3D Video-Library and Operation Schedule** in each of the remote subsystems. The administration of these functions may be performed from the central control unit or in situ by an operator. Each remote subsystem is capable of enhancing the communication goals of three-dimensional messages by incorporating different technologies, such as a back plane screens, presence sensors (interactivity functions) and photo or video cameras, among many other elements.

Each Remote Subsystem has the capacity to operate autonomously according to the instructions determined in the Operation Schedule and the 3D Video-Library.

Each Remote Subsystem can incorporate any other technology or function different to the one of projecting three-dimensional messages that allows the observer to view messages while making use of these other technologies or "Multi-Functionalities", such as a printed information distribution system, queue-ticket dispenser, public or private telephone, weighing system or loading /downloading PDA-handheld information, among many other applications. The attached descriptive drawings supporting the explanation of this invention are an integral part of the invention, having an illustrative and non-limitative purpose.

### BRIEF DESCRIPTION OF DRAWINGS

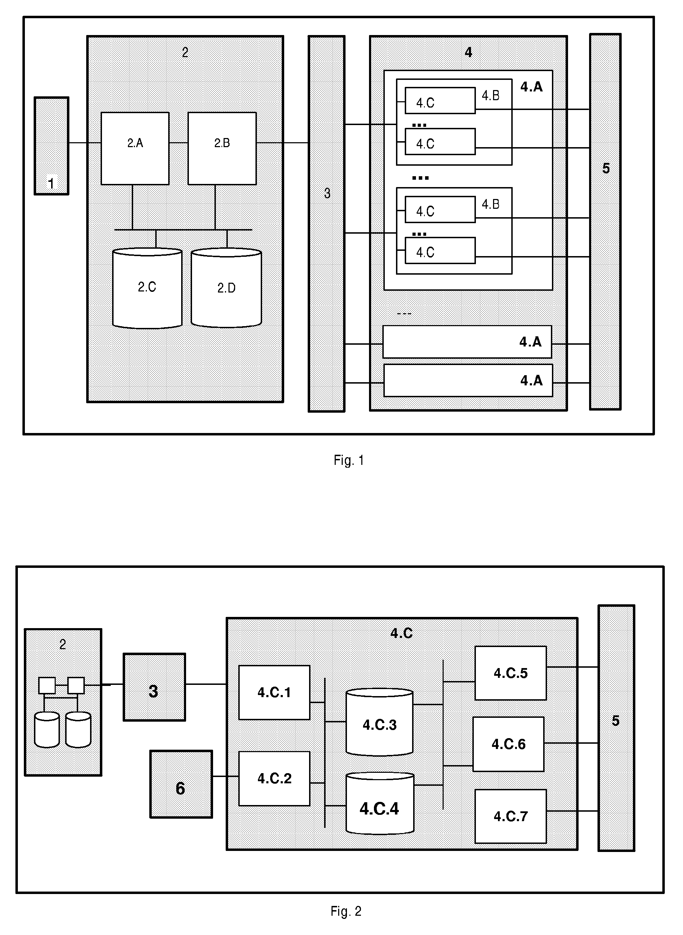

**Figure 1** illustrates the general configuration of the system. Element (1) refers to the **Advertiser**, which communicates with the central control unit through subsystem (2.A). Subsystem (2) refers to the **Central Control Unit,** integrated by the following elements: **(2.A) Advertiser's Operation Subsystem; (2.B) Administration, Operation, Supervision and Control subsystem of the remote subsystems; (2.C) Master or Central Operation and Projection Schedules; (2.D) Master or Central 3D Video-Library.** Subsystem **(3)** refers to the Telecommunications Subsystem. Subsystem **(4)** refers to the **Remote Subsystems Networks**. All the remote subsystems are segmented in different **Networks (4.A).** Each network may be segmented in different **Circuits (4.B).** Each Circuit is built by the integration of several **Remote Subsystems (4.C).** Element **(5)** is the **Observer** or **Receptor,** who refers to each potential receptor of the messaged promoted by the advertisers,
**Figure 2** describes the **Remote Subsystem (4.C)** main elements: **(4.C.1) Telecommunications Subsystem,** to communicate the Remote Subsystem with the Central Control Unit; **(4.C.2) Local Operation Subsystem,** to able an **Operator (6)** to access the Remote Subsystem in situ; **(4.C.3) Local Operation Schedule; (4.C.4) Local 3D Video-Library; (4.C.5) 3D Messages Projection Subsystem; (4.C.6) Communication Accessories**, to enhance the global communication effect, such as back-plane screens, Interactive functions, etc; (**4.C.7) Multi-Functionalities** Subsystem. They are also identified again the Central Control Unit (2) and the Telecommunications Subsystem (3), only for reference purposes.

### DETAILED DESCRIPTION OF THE INVENTION

Such as described in figure 1, the **Advertiser** (1) is responsible for the production of messages to be projected in several **Remote Sub-systems** (4.C). An advertiser will require project an advertising message in a three-dimensional advertising Communication media that integrates remote subsystems in different **Networks (4.A)** and **Circuits (4.B)** -remote subsystems segmentation-. Without being an exhaustive list and dictated only as an example, remote subsystems may be segmented in the following two networks; (1) an advertising media network, integrated by several remote subsystems located at point-of-sale centers and segmented into many circuits, as a theaters circuit, a drugstores circuit, a supermarket circuit, etc; (2) educational network, integrated by several remote subsystems located at educational centers and segmented into many circuits, as a schools circuit, a museums circuit, etc.

The **Observer (5)** refers to any physical person that views a three dimensional message projected by a remote subsystem. According to the application of the communication media (network) and the location of the remote subsystem, the observer can play different roles such as, for example, a student, worker, buyer of tangible or intangible goods, consumer of goods or services or any other role while viewing the message, actively or passively interacting with the remote subsystem.

Through the **Central Control Unit (2)**, the advertiser can carry out all the contractual functions with the System Operator through the **Advertiser's Operation Subsystem (2.A),** related to the hiring of time-slots and the projection of messages. Additionally, an advertiser will also be able to directly interact with an observer through the central control unit, supported by the use of cameras and being able to modify the messages to be transmitted in real time.

The central control unit administrates, controls, supervises and governs the remote subsystems operation and functionality through the **Remote Subsystems' Administration Subsystem** (2.B), but an operator can also modify each of the remote subsystems in situ.

The central control unit also contains a global copy of the Operation and Projection Schedules of all the remote subsystems, called **Master** or **Central Operation** and **Projection Schedules** (2.C), as well as a global copy of all the 3D messages to be projected in all the remote subsystems, called the **Master** or **Central 3D Video-Library (2.D).**

The central control unit keeps control of every remote subsystem through the **Telecommunications Subsystem (3),** which can be developed with different physical and logical technologies: point to point, virtual, public or private networks based in dial-up lines, satellite links, ATM, internet or X-25, among any other.

The **Remote Subsystem (4.C)** consists of any system able to reproduce three-dimensional images or messages, regardless of the technology principle, integrated to a communications system or media. The remote subsystem includes:
1. The optics, hardware and software required for the reproduction of three-dimensional images or messages, optionally with audio, transmitted in real time from the Central Control Unit or stored in their own 3D Video-Library (also transmitted from the Central Control Unit or recorded in situ by an operator).
2. The optional software and hardware required to incorporate additional functions but related to the projection of the message such as elements for local or remote interaction with an observer (presence sensors, keyboards, mouse, etc.), cameras (photo, video or other equivalent systems that record or transmit images), audio recording and/or transmission, projection of images in back plane behind the three-dimensional image, among others.
3. The hardware and software that enable the communication functions with the Central Control Unit through the Telecommunications System, allowing the Remote Subsystem to be configured to operate autonomously according to the Operation Schedule and the 3D Video-Library.
4. The hardware and software that allow the Remote Subsystem to be accessed in situ by an operator.
5. The hardware and software that allow the Remote Subsystem to carry out other specific functions required by an application, such as the multifunctional services.
6. The case designs and their electric and electronic components that allow the Remote Subsystem to contain all the previous elements and be set up and adapted to any physical space.

The location of the remote subsystem can be any physical place, such as shopping centers, service stations, restaurants, work places, homes, warehouses, hospitals, schools, exteriors or any other equivalent environment or consumption center, as well as mobile environments, such as cars, buses, airplanes, ships or any other vehicle regardless of size, in which a Remote Subsystem can be installed. The Central Control Unit is located at a distance from the subsystems, therefore, it is necessary to have a Telecommunications Subsystem or an operator in situ in order to establish the communication between both and to execute the different administration, operation, control or supervision functions or any other equivalent action.

The three-dimensional **images** projected with an optical immersion effect allow the images to appear suspended or floating in the air. These can be real or fictitious characters, objects, texts and any other visual icon, projected individually or jointly, which can be static or mobile, rotating at different angles and axes and undergoing (or not) transformations in their appearance, shape, color, size or any other visual characteristic with unlimited creative effects.

Moreover, the system is structured to transmit, project, program and control different **messages,** which incorporate the integration of images, audio and any other additional element involved in a communications strategy, with a specific duration and supported by the advertiser. In addition, the messages can contain different images and audio to enable interactive functions according to the options presented to and selected by an observer. The messages can also include optional elements (such as photo or video cameras and audio systems, among others), or project images in back plane in coordination with the 3D images to enhance the global effect.

The present invention also covers what we refer to as **multifunctions,** which constitute any other technology or functionality different to the one of projecting 3D messages. These are included in the remote subsystem case to allow the observer to perform or take advantage of other functions that are of interest to him/her in order to obtain a specific benefit. Some examples are:
a. A printed information dispenser (advertising, sales, educational, etc.) for various formats (cards, pamphlets, information sheets, newspapers, etc.), to communicate different messages.
b. Queue-ticket dispenser systems to organize people attendance where waiting lines are generated.
c. A public or private telephone, that allows the observer to make telephone calls.
d. A weighing system that allows the observer to weigh different objects.
e. An optic reading device, such as bar-code readers, that allows the observer to obtain specific product Information (prices, characteristics, etc.).
f. A form dispenser with a table support and a pen, that allows the observer to fill out forms or applications.
g. Vending machines for various products.
h. Automated ticketing systems that allow the observer to purchase different services.
i. Automated paying systems for services such as parking or any other equivalent payment service.
j. A system to load or download information with any kind of electronic or computer devices like, for example, handheld or PDA systems.
k. Any other equivalent solution that may be required in a public or private area where people tend to congregate in groups or individually, and are stimulated to use the functions built into a remote subsystem.

According to the communication system application, all the remote subsystems set up in locations can be segmented in **networks** where each one of these networks refers to a set of remote subsystems that, for any strategic reason, transmits the same message type. For example, there can be advertising, educational or entertainment networks that, given their characteristics, establish a specific communication environment between the system and the observers.

At the same time, a network can be segmented in **circuits** whereby, for any strategic reason, each of the resulting segments transmits more specific messages, appropriate to equally specific characteristics of observer groups. For example, in an advertising communications system, different circuits can be identified, where messages are related to consumer expectations, according to the characteristics of the outlet. Without constituting an exhaustive list, the following are examples of circuits: 1. Supermarket circuit, to support advertising strategies for mass consumer Items; 2. Drugstore circuit, where medicines are sold; 3. Theater circuit, for product sale or movie ads; 4. Car circuit, for advertisement of car models, consumer items, dealerships or any service related to this sector. Analyzing the relationships between the advertiser (message sponsor) and the consumer (message observer), according to the characteristics of the outlet, an almost infinite variety of circuits have been found: theaters, auditoriums, music stores, restaurants, department stores, shopping malls, bars, educational institutions, governments institutions, airports, etc. Segmenting the potential observers and environments where they shop or in which they spend a time, a network can be divided into various circuits, such as advertising, educational, informative or entertainment networks, among many others.

The system integrates three-dimensional message projection, the administration of remote subsystems (remotely or in situ) and the transmission of messages through a 3D Video-Library and an Operation Schedule. It also integrates the administrative, contractual and operative interaction with the advertiser, among other functions. For the correct operation of the 3D communication system -object of the present invention- it should include the following elements:
1. **3D Video-Library.** Set of organized 3D messages through a master 3D Video-Library in the Central Control Unit and specific 3D Video-Libraries in each one of the remote subsystems. The messages can be recorded in any technological media, either magnetic, electromagnetic, laser, electronic of solid state or any other equivalent media, regardless of the standards and technology evolution.
2. **Projection Schedule.** Timetable that relates the availability of free time slots to project new 3D messages, scheduled messages and messages contained in the 3D Video-Library in each of the remote subsystems. The Projection Schedule administrates the projection sequences and replays of all the messages stored in the 3D Video-Library in a certain time span. The Master Projection Schedule of the Central Control Unit through the Telecommunications System administers the Remote Subsystem Projection Schedule, although an operator can also modify it in situ. The Projection Schedule is part of the Operation Schedule. A Master Projection Schedule exists in the Central Control Unit and a specific Projection Schedule exists for each one of the remote subsystems.
3. **Operation Schedule.** Timetable that registers the operation functions to determine the times and days during which to turn the Remote Subsystem on and off, the time and day when the Remote Subsystem should communicate with the Central Control Unit to update its functionality, the content of the 3D Video-Library, the Projection Schedules. It also reports the status of the subsystem or any other function that the Remote Subsystem should communicate to or receive from the Central Control Unit or the operator. If, for some reason, the Remote System identifies inconsistencies in any of the elements included in the Operation Schedule, it can request reconfiguration to the Central Control Unit or the operator.
4. **Master Operation Schedule.** Central Control Unit timetable that administers all the remote subsystems operation schedules. The Master Operation Schedule coordinates and establishes the logical projection relationships for each one of the remote subsystems in the networks and circuits, according to the advertisers' requirements.

The invention has been described sufficiently so that a person with knowledge of the matter can reproduce and obtain the results mentioned in the present invention. However, any person skilled in the background art that concerns the present invention could be able to make modifications not described in the present application. Any such modifications (to an individual structure or factory processes) that rely on the technological base of this invention will be subject to the claims mentioned herein.

## Claims

1. Three-dimensional communications media with different purposes, such as educational, advertising, entertainment, training or other, **characterized by** its ability to carry out this function through a 3D projection subsystems network, administered, controlled, supervised and operated remotely by a central control unit, through a telecommunications system, or in situ, by a group of operators. The remote subsystems are able to project different 3D messages in real time - simultaneously or not - from the central control unit. They are also able to project messages stored in the remote subsystem -Interactive or not-, with different additional communication supports such as back plane screens, video and photo camera and recorders, with audio recording. These can be located anywhere, segmenting all the remote subsystems logically in networks and circuits, where the advertiser is able to interact with the system to carry out different administrative or contractual operations.

2. Three dimensional communications media, as claimed in the previous disclosure, also **characterized by** projected images which can vary in size, making them larger or smaller with minimum modifications in the system.

3. Three dimensional communication media, as claimed in disclosures 1 and 2, **characterized by** the location of remote subsystems in different places, such as shopping centers, facilities services, restaurants, stands, fairs, exhibitions, work places, public buildings, homes, warehouses, hospitals, schools, exteriors or any other equivalent environment or physical location, as well as mobile environments, including cars, buses, airplanes, ships or any other vehicle.

4. Three dimensional communication medias, as claimed in disclosures 1 to 3, **characterized by** the inclusion of multi-functional facilities in the remote subsystems.
